# FASCICULE DE BREVET EUROPEEN

(11) **EP 0 679 338 B1**
(45) Date de publication et mention de la délivrance du brevet: **07.07.1999**
(21) Numéro de dépôt: 94105214.4
(22) Date de dépôt: 02.04.1994
(51) Int. Cl.: A23F 5/40, A23C 9/156

(54) **Procédé de fabrication d'une composition pour boisson**
Verfahren zur Herstellung einer Getränkezusammensetzung
Process for the preparation of a beverage composition

(43) Date de publication de la demande: 02.11.1995
(73) Titulaire: SOCIETE DES PRODUITS NESTLE S.A., 1800 Vevey (CH)
(72) Inventeur: Chaveron, Michel, CH-1814 La Tour-de-Peilz (CH); Schlaginhaufen, Jürg, CH-3072 Ostermundigen (CH); Wyss, Heinz, CH-3515 Oberdiessbach (CH)
(74) Mandataire: Archambault, Jean

(56) Documents cités:
- EP-A- 0 154 192
- EP-A- 0 406 621
- EP-A- 0 435 822
- US-A- 2 398 081
- US-A- 2 564 332
- US-A- 3 653 911
- DATABASE FSTA INTERNATIONAL FOOD INFORMATION SERVICE (IFIS), FRANFURT/MAIN, DE 82-05-p0684 1982, S. PAWLIK ET AL. 'Selection of factors preventing protein coagulation in dried milk products when dissolved in water'

## Description

La présente invention se rapporte à un procédé de fabrication d'une composition pour boisson instantanée du type café au lait ou succédané de café au lait.

Les boissons instantanées du type café au lait ou succédané de café au lait peuvent être fabriquées par mélange à sec d'une poudre de base, en général une crème à café et d'une poudre de café ou succédané de café soluble. Du café ou succédané soluble peut avoir été ajouté au concentré de crème liquide avant le séchage définitif. Lors de la préparation de la poudre de base, on ajoute des sels de stabilisation au lait devant être préchauffé, puis stérilisé par UHT, dans le but d'éviter la floculation des protéines soit lors de la préparation de la poudre, soit lors de la reconstitution de la boisson en présence de café.

Le mélange à sec présente certains inconvénients. Il est difficile d'opérer le mélange de poudres de manière parfaitement homogène. A la reconstitution, le mélange de poudres ne se dissout pas non plus toujours pour donner une boisson d'aspect parfaitement homogène. Par ailleurs, on constate une perte d'arômes.

On a proposé, par exemple selon US-A-2398081, d'effectuer le mélange de café et de lait par voie humide sous forme de concentrés que l'on sèche ensuite en une poudre homogène. Cette méthode permet d'éviter l'étape supplémentaire de mélange à sec. Elle s'est cependant heurtée à des difficultés, en ce sens qu'il n'a pas été possible d'éliminer complètement une floculation visible des protéines lors de la reconstitution de la boisson à l'eau chaude.

EP-A-154192 Concerne la préparation d'une composition pulvérulente pour boisson du type cappuccino selon lequel on prépare une composition liquide de base contenant des matières grasses lactiques ou végétales, des protéines, du lactose et un autre hydrate de carbone avec des proportions bien définies de protéines et de lactose. La composition de base, additionnée de sels de stabilisation subit de manière classique un traitement de thermique par UHT, est concentrée par évaporation, puis, après préchauffage à 75° C le concentrat est séché par pulvérisation en tour de séchage. On contourne les risques de coagulation des protéines lactiques en présence de café lors de traitements thermiques tels que le séchage pour obtenir une poudre mixte comprenant la composition en question et du café, soit par voie humide en neutralisant l'acidité du café avant son mélange avec le lait préalablement au séchage, soit de préférence par voie sèche en introduisant le café soluble aggloméré dans la tour en même temps que les particules fines recyclées de concentrat séché.

L'abrégé No 82-05-p0684, "Food Science and technology Abstracts", 1982, concerne la préparation d'une composition sèche de type café au lait sucré évitant la coagulation des protéines lactiques à la reconstitution dans l'eau chaude, qui consiste à mélanger du lait, du café et du sucre en présence ou non de sels de stabilisation. La solution au problème de la coagulation est apportée par la combinaison des moyens constitués par le traitement thermique initial du lait en présence de citrate tampon et la concentration puis le traitement thermique du lait tamponé en présence de café et d'une quantité relativement importante de sucre.

US-A-2564332 Divulgue la préparation d'une composition sèche pour boisson, dans laquelle on mélange de la lécithine avec de la poudre de café soluble, on mélange ensuite cette poudre à un concentré d'extrait de café, puis on chauffe, homogénéise et sèche le mélange par pulvérisation ou on mélange la lécithine avec une huile végétale hydrogénée, on ajoute du lait écrémé évaporé et de la crème ou du lait entier évaporé, puis on chauffe et on homogénéise et on ajoute un extrait de café liquide chauffé au mélange homogénéisé. La solution au problème de coagulation est de produire une dispersion stable par le biais de l'adjonction d'un agent émulsifiant, la lécithine, et avec le concours de l'homogénéisation préalablement au séchage.

Le but de l'invention est de produire un café au lait ou succédané de café au lait instantané présentant une meilleure dissolution et des qualités organoleptiques supérieures aux cafés au lait ou succédanés de café au lait instantanés connus lors de sa reconstitution à l'eau chaude, voire bouillante.

L'invention concerne donc un procédé de fabrication d'une composition pour boisson du type café au lait ou succédané de café au lait, dans lequel on traite thermiquement un lait ou un dérivé du lait, on le concentre, on mélange par voie humide le dit lait ou le dit dérivé du lait sous forme concentrée et un café ou un succédané de café, on ajuste le pH du concentrat entre 5,8 et 6,3 et sa teneur en calcium libre entre 3 et 5 mmoles/l, on traite thermiquement le dit concentrat de manière à effectuer une floculation contrôlée des protéines sériques pour éviter une floculation perceptible ultérieure de celles-ci lors de la reconstitution de la boisson, et on sèche le mélange par pulvérisation.

Dans la suite de l'exposé, on désignera par café indiféremment le café proprement dit ou un succédané de café tel que par exemple de la chicorée ou encore un mélange de ces produits.

On désignera par "lait" un lait proprement dit, entier ou plus ou moins écrémé, naturel ou reconstitué à partir de poudre. Le terme "dérivé du lait" désignera une crème ou un agent de blanchiment du café comprenant, par exemple, des protéines lactiques, du lactose et, le cas échéant, une graisse végétale.

Pour mettre en oeuvre le procédé, on standardise le cas échéant le lait entier, c'est à dire qu'on ajuste les quantités pondérales respectives de matière grasse et de solides non gras aux valeurs désirées par addition, selon les besoins, par exemple de lait écrémé, de crème ou d'huile de beurre. Dans le cas d'un dérivé, on ajuste les quantités de protéines, par exemple de caséine et de protéines de lactosérum, le cas échéant déminéralisées et de lactose. On ajuste le cas échéant la quantité de matière grasse lactique ou végétale, en cas de besoin préalablement fondue, de préférence après préchauffage du mélange à 50-80°C.

Une fois la standardisation achevée, on traite thermiquement le mélange à 90-120°C pendant 1 à 1200 s par chauffage direct, par exemple par injection directe de vapeur, ou indirect au moyen d'échangeur tubulaire ou à plaques, le cas échéant combiné à un tube d'attente. Il s'agit du premier traitement thermique. On préfère l'injection directe de vapeur à 95-115°C pendant 5-20 s, suivie d'une expansion à l'entrée d'un évaporateur. On concentre ensuite le liquide dans un évaporateur à flot tombant à simple ou, de préférence à multiple effet, à une teneur en matière sèche de 40-55% en poids.

Après concentration, on peut refroidir le concentrat, par exemple à 15-20°C et le cas échéant l'entreposer en cuve dans l'attente d'un traitement ultérieur.

A ce stade, il est nécessaire que le pH et la teneur en calcium libre soient contrôlés. En effet, une floculation dirigée des protéines sériques ne peut s effectuer correctement que dans la mesure où, avant le traitement thermique ultérieur, le pH se situe entre 5,8 et 6,3 et la teneur en calcium libre entre 3 et 5 mmoles/l. Il faut donc, le cas échéant, acidifier la solution au moyen d'acide alimentaire, par exemple l'acide lactique, phosphorique ou citrique. Si nécessaire, on peut ajouter le calcium, par exemple sous forme de chlorure de calcium. On traite thermiquement le concentrat, de préférence de pH 6,1-6,4, typiquement environ 6,25, de manière analogue au traitement thermique précédent, de préférence par injection directe de vapeur à 90-125°C pendant 5-20 s, par exemple à environ 105°C pendant environ 10 s. Ce traitement du concentrat, ou second traitement thermique, induit une floculation contrôlée des protéines sériques dont le but est d'éviter une floculation perceptible ultérieure de celles-ci lors de la reconstitution de la boisson.

Après refroidissement, par exemple, par expansion à environ 70-80°C, on ajoute au concentrat du café, par exemple un extrait de café liquide représentant, en terme de matières sèches, jusqu'à 25% en poids du produit final. Cette adjonction peut s'opérer en cuve, par charges ou de préférence directement en ligne et avoir lieu en une seule fois ou en plusieurs, le cas échéant par quantités progressives.

Selon une première variante de l'adjonction de café, qui est préférée, on préchauffe le concentrat de café à la même température que le concentrat lactique, on les mélange, puis on soumet le mélange au second traitement thermique tel que défini précédemment.

Selon une deuxième variante de l'adjonction de café, celle-ci est partagée en deux parts, l'une étant ajoutée avant le second traitement thermique et l'autre constituant le complément après le second traitement thermique.

Aprés adjonction de café, le pH est 5,8-6,3 selon la quantité de café ajouté. On peut homogénéiser le mélange, en un ou deux étages, par exemple à 20-200 bar, de préférence en deux étages, par exemple à environ 110 bar pour le premier et environ 50 bar pour le second. Cette opération est optionnelle, bien que préférée.

De manière également optionnelle, on peut injecter dans le concentrat un gaz inerte sous faible pression de manière à alléger la structure de la poudre pour faciliter sa dissolution ultérieure.

Le séchage a lieu par pulvérisation, sous une pression de 20-300 bar, de préférence à environ 80 bar, en tour dans un courant d'air chaud.

Après séchage, on agglomère de préférence la poudre fine, par exemple en présence d'une solution de lécithine ou de lactose en vue d'améliorer la mouillabilité de la poudre finale, cette étape constituant une option préférée.

Bien entendu, l'adjonction de café par voie humide peut être partielle, le reste du café soluble pouvant alors être mélangé à sec à la poudre provenant de la tour de séchage.

Les exemples ci-après illustrent l'invention. Dans ceux-ci, les parties et pourcentages sont pondéraux sauf indication contraire.

### Exemple 1

On mélange 4140 kg de lait écrémé et 287 kg d'une poudre de lactosérum déminéralisé à 50%, dont la composition (%) est la suivante:

| | |
|---|---|
| Protéine: | 11-12 |
| Lactose: | 78 |
| Graisse: | 1.5 |
| Cendres: | 4 |
| Eau: | 4 |

Après dissolution, on préchauffe la solution à 73°C dans un échangeur de chaleur à plaques et on y ajoute 216 kg de graisse de coco hydrogénée ayant été préalablement fondue. On mélange ces matières premières, puis on les conduit dans un appareil de stérilisation UHT où le mélange est traité à 115°C pendant 10 s par injection directe de vapeur, puis introduit dans un évaporateur à flot tombant où il est soumis à une expansion et concentré à 50% de matière sèche. Après préchauffage à 73°C dans un échangeur à plaques, on ajoute au concentrat 70 kg d'une solution concentrée à 45% de café préparée par dissolution de café soluble dans l'eau, le pH étant 5,9, puis on conduit le mélange dans un appareil de stérilisation UHT avec injection directe de vapeur où on le soumet à un second traitement thermique à 105°C pendant 10 s. On sèche alors le concentrat dans une tour de séchage par pulvérisation sous une pression de 60 bar et à 75°C au niveau de la buse. On ajoute enfin à la poudre obtenue 126 kg de poudre fine de café en même temps que les fines séparées de l'air de séchage dans un cyclône associé à la tour de séchage et renvoyées dans la tour.

La poudre finale a la composition indiquée dans le tableau 1 ci-après:

**Tableau 1**

| Composants | Composition % |
|---|---|
| Protéines | 16,2 |
| dont ex lait écrémé | 13 |
| ex lactosérum | 3,2 |
| Graisse végétale | 21,2 |
| Lactose | 38,8 |
| dont ex lait écrémé | 19,2 |
| ex lactosérum | 19,6 |
| Café | 15 |
| Minéraux | 6,2 |
| Eau | 2,6 |

La poudre présente un aspect homogène. A la redissolution, même dans l'eau bouillante, la boisson ne présente pas de floculation perceptible des protéines de lait et a une flaveur franche de café.

### Exemple 2

On procède comme à l'exemple 1 sauf que l'on introduit la solution concentrée de café à 20°C dans le concentrat après l'avoir traité thermiquement une seconde fois, puis refroidi à 20°C. Les opérations ultérieures de préchauffage et de séchage du mélange ont lieu comme indiqué dans l'exemple 1.

La poudre présente un aspect homogène. A la redissolution, même dans l'eau bouillante, la boisson ne présente pas de floculation perceptible des protéines de lait et a une flaveur franche de café.

### Exemple 3

On procède comme à l'exemple 2, sauf qu' après préchauffage du mélange concentré de lait et de café, on l'homogénéise en deux étages à 110 bar au premier étage, puis à 50 bar au second avant de le sécher.

La poudre présente un aspect homogène. A la redissolution, même dans l'eau bouillante, la boisson ne présente pas de floculation perceptible des protéines de lait et a une flaveur franche de café.

### Exemple 4

On procède comme à l'exemple 1, sauf qu' après préchauffage du mélange concentré de lait et de café, on l'homogénéise en deux étages à 110 bar au premier étage, puis à 50 bar au second avant de le sécher.

La poudre présente un aspect homogène. A la redissolution, même dans l'eau bouillante, la boisson ne présente pas de floculation perceptible des protéines de lait et a une flaveur franche de café.

### Exemple 5

On procède comme à l'exemple 1, à ceci près que le second traitement thermique UHT du mélange de concentrats de lait et de café a lieu à 115°C pendant 5 s.

La poudre présente un aspect homogène. A la redissolution, même dans l'eau bouillante, la boisson ne présente pas de floculation perceptible des protéines de lait et a une flaveur franche de café.

### Exemple 6

On procède comme à l'exemple 4, à ceci près que le second traitement thermique UHT du mélange de concentrats de lait et de café a lieu à 115°C pendant 5 s.

La poudre présente un aspect homogène. A la redissolution, même dans l'eau bouillante, la boisson ne présente pas de floculation perceptible des protéines de lait et a une flaveur franche de café.

### Exemple 7

On ajoute au mélange de lait écrémé et de protéines de lactosérum 0,35% de dihydrogénophosphate de sodium avant l'addition de graisse de coco fondue. La suite des opérations a lieu comme à l'exemple 1, mis à part le fait que l'on introduit dans la ligne la totalité du café entre ler préchauffage et le séchage, c'est à dire sans mélange à sec du reste de poudre de café.

La poudre présente un aspect homogène. A la redissolution, même dans l'eau bouillante, la boisson ne présente pas de floculation perceptible des protéines de lait et a une flaveur franche de café.

### Exemple 8

On procède comme à l'exemple 2, sauf qu' après préchauffage du mélange concentré de lait et de café, on l'homogénéise en deux étages à 200 bar au premier étage, puis à 50 bar au second et que l'on introduit dans la ligne la totalité du café avant l'homogénéisation et le séchage, c'est à dire sans mélange à sec du reste de poudre de café.

La poudre présente un aspect homogène. A la redissolution, même dans l'eau bouillante, la boisson ne présente pas de floculation perceptible des protéines de lait et a une flaveur franche de café.

### Exemple 9

On procède comme à l'exemple 2, sauf que le premier traitement thermique UHT a lieu à 105°C pendant 10 s, que le second traitement thermique a lieu à 115°C pendant 10 s et que la pression de pulvérisation au niveau de la buse est 250 bar.

La poudre présente un aspect homogène. A la redissolution, même dans l'eau bouillante, la boisson ne présente pas de floculation perceptible des protéines de lait et a une flaveur franche de café.

### Exemple 10

On procède comme à l'exemple 3, mis à part le fait que l'homogénéisation a lieu à 50 bar au premier étage, puis à 110 bar au second et que l'on injecte de l'azote sous pression dans le mélange concentré de café et de lait juste avant la pulvérisation en haut de la tour de séchage.

A la redissolution, même dans l'eau bouillante, la boisson ne présente pas de floculation perceptible des protéines de lait et a une flaveur franche de café.

### Exemple 11

On procède comme à l'exemple 3, mis à part le fait que l'on injecte de l'azote sous une pression de 7 bar dans le mélange concentré de café et de lait dont la pression est 6 bar, juste avant une pompe à haute pression qui reprend le mélange gazéifié et le dirige vers une buse de pulvérisation en haut de la tour de séchage et que l'on pulvérise une solution aqueuse à 50 % de lactose à 80°C sur la poudre dans la tour de séchage, de manière à obtenir une concentration finale de lactose de 0,3 % dans le produit final.

Le gazage confère un poids spécifique de 280 g/l environ à la poudre avec un débit d'injection d'azote de 1 l/min et un débit de concentrat à 52 % de matière sèche de 510 l/h.

A la redissolution, même dans l'eau bouillante, la boisson ne présente pas de floculation perceptible des protéines de lait et a une flaveur franche de café.

### Exemple 12

On procède comme à l'exemple 1 précédent, mis à par le fait que l'on remplace le café par un mélange équipondéral de café et de chicorée.

### Exemple 13

On procède comme à l'exemple 1 précédent, sauf que la poudre de lactosérum déminéralisée, après reconstitution dans l'eau, subit un traitement préliminaire pour prédénaturer les protéines sériques comme suit:
On dilue 287 kg de poudre de lactosérum déminéralisé à 50% dans 1100 l d'eau, puis on ajuste le pH de la masse à 5,9 au moyen d'acide lactique. On s'assure alors de manière connue au moyen d'une électrode spécifique que la teneur en calcium libre est comprise entre 3 et 5 mmoles/l. Si la valeur est inférieure à 3 mmoles/l, on complète par addition de chlorure de calcium. On chauffe ensuite la masse de lactosérum par injection directe de vapeur à 105°C avec un temps d'attente de 15 s. On mélange enfin le lactosérum déminéralisé ainsi traité à 4140 kg de lait écrémé, puis on fait subir au mélange les opérations décrites dans l'exemple 1.

## Revendications

1. Procédé de fabrication d'une composition pour boisson du type café au lait ou succédané de café au lait, dans lequel on traite thermiquement un lait ou un dérivé du lait, on le concentre, on mélange par voie humide le dit lait ou le dit dérivé du lait sous forme concentrée et un café ou un succédané de café on ajuste le pH du concentrat entre 5,8 et 6,3 et sa teneur en calcium libre entre 3 et 5 mmoles/l et, on traite thermiquement le dit concentrat de manière à effectuer une floculation contrôlée des protéines sériques pour éviter une floculation perceptible ultérieure de celles-ci lors de la reconstitution de la boisson, et on sèche le mélange par pulvérisation.

2. Procédé selon la revendication 1, caractérisé par le fait que l'on traite thermiquement le concentrat par injection directe de vapeur à 90-125°C pendant 5-20 s.

3. Procédé selon la revendication 1, caractérisé par le fait que le concentrat destiné à être traité thermiquement est obtenu par mélange de lait écrémé, de lactosérum partiellement déminéralisé et de graisse végétale, traitement thermique et concentration.

4. Procédé selon la revendication 3, caractérisé par le fait que l'on ajuste le pH du lactosérum partiellement déminéralisé reconstitué avec de l'eau à environ 5,9 et l'on règle sa teneur en calcium libre entre 3 et 5 mmoles/l préalablement à son mélange avec le lait écrémé.

5. Procédé selon la revendication 1, caractérisé par le fait que l'on ajoute au concentrat du café, notamment un extrait de café liquide représentant, en terme de matières sèches, jusqu'à 25% en poids du produit final, par charges ou de préférence directement en ligne, en une seule ou plusieurs fois.

6. Procédé selon la revendication 5, caractérisé par le fait que l'adjonction de café a lieu après le traitement thermique du concentrat.

7. Procédé selon la revendication 5, caractérisé par le fait que l'adjonction de café a lieu avant le traitement thermique du concentrat.

8. Procédé selon la revendication 6 ou 7, caractérisé par le fait qu'aprés l'adjonction de café, on homogénéise le mélange, en un ou deux étages, à 20-200 bar.

9. Procédé selon la revendication 1, caractérisé par le fait que l'on injecte dans le concentrat un gaz inerte sous faible pression de manière à alléger la structure de la poudre pour faciliter sa dissolution ultérieure.

## Claims

1. Process for preparing a composition for a beverage of the white coffee type or white coffee substitute type, wherein a milk or said milk derivative in concentrated form is heat treated, and concentrated, the said milk or milk derivative is mixed by a wet method with a coffee or coffee substitute, the pH of the concentrate is adjusted to between 5.8 and 6.3 and its free calcium content is adjusted to between 3 and 5 mmoles/l, and the said concentrate is heat treated so as to produce controlled flocculation of the whey proteins in order to prevent subsequent perceptible flocculation thereof when the beverage is reconstituted, and the mixture is spray-dried.

2. Process according to claim 1, characterized in that the concentrate is heat treated by direct injection of steam at 90-125°C for 5-20 s.

3. Process according to claim 1, characterized in that the concentrate intended to be heat treated is obtained by mixing skimmed milk, partially demineralized whey and vegetable fats, heat treatment and concentration thereof.

4. Process according to claim 3, characterized in that the pH of the partially demineralized whey reconstituted with water is adjusted to approximately 5.9 and the free calcium content is regulated to between 3 and 5 mmoles/l prior to it being mixed with the skimmed milk.

5. Process according to claim 1, characterized in that coffee is added to the concentrate, in particular a liquid coffee extract representing, in terms of dry matter, up to 25 % by weight of the final product, in batches or preferably directly in-line, in one or more additions.

6. Process according to claim 5, characterized in that the addition of coffee takes place after the heat treatment of the concentrate.

7. Process according to claim 5, characterized in that the addition of coffee takes place before the heat treatment of the concentrate.

8. Process according to claim 6 or 7, characterized in that after the coffee addition, the mixture is homogenized in one or two stages at 20-200 bar.

9. Process according to claim 1, characterized in that an inert gas at a low pressure is injected into the concentrate so as to lighten the structure of the powder in order to facilitate its subsequent dissolution.

## Patentansprüche

1. Verfahren zur Herstellung einer Zusammensetzung für ein Getränk vom Typ Milchkaffee oder Milchkaffee-Ersatz, bei dem man eine Milch oder ein Milchderivat thermisch behandelt, konzentriert, auf nassem Wege diese Milch oder dieses Milchderivat in konzentrierter Form mit einem Kaffee oder einem Kaffee-Ersatz mischt, den pH des Konzentrats auf zwischen 5,8 und 6,3 und den Gehalt an freiem Calcium auf zwischen 3 und 5 mmol/l einstellt und dieses Konzentrat thermisch auf eine solche Weise behandelt, daß man eine kontrollierte Ausflockung der Molkeproteine bewirkt, um ihre spätere wahrnehmbare Ausflockung bei der Rekonstituierung des Getränks zu vermeiden, und die Mischung durch Zerstäubung trocknet.

2. Verfahren nach Anspruch 1, dadurch gekennzeichnet, daß man das Konzentrat durch direkte Einspritzung eines Dampfes von 90-125°C für 5-20 s thermisch behandelt.

3. Verfahren nach Anspruch 1, dadurch gekennzeichnet, daß das Konzentrat, das für die thermische Behandlung vorgesehen ist, durch Mischen einer Magermilch, einer teilweise entmineralisierten Molke und eines Pflanzenfetts, thermische Behandlung und Konzentrieren erhalten wird.

4. Verfahren nach Anspruch 3, dadurch gekennzeichnet, daß man den pH der teilweise entmineralisierten, mit Wasser rekonstituierten Molke auf etwa 5,9 einstellt und den Gehalt an freiem Calcium auf zwischen 3 und 5 mmol/l einregelt, bevor man sie mit der Magermilch vermischt.

5. Verfahren nach Anspruch 1, dadurch gekennzeichnet, daß man dem Konzentrat Kaffee, insbesondere den Extrakt eines flüssigen Kaffee-Ersatzes, der, ausgedrückt in Trockenmasse, bis zu 25 Gew.-% des Endprodukts darstellt, entweder ansatzweise oder vorzugsweise direkt in der Produktionsstraße, und zwar auf einmal oder auf mehrere Male, zumischt.

6. Verfahren nach Anspruch 5, dadurch gekennzeichnet, daß die Zugabe des Kaffes nach der thermischen Behandlung des Konzentrats erfolgt.

7. Verfahren nach Anspruch 5, dadurch gekennzeichnet, daß die Zugabe des Kaffes vor der thermischen Behandlung des Konzentrats erfolgt.

8. Verfahren nach Anspruch 6 oder 7, dadurch gekennzeichnet, daß man nach der Zugabe des Kaffees die Mischung in einer oder zwei Stufen bei 20 - 200 bar homogenisiert.

9. Verfahren nach Anspruch 1, dadurch gekennzeichnet, daß man in das Konzentrat bei schwachem Druck ein Inertgas auf solche Weise injiziert, daß die Struktur des Pulvers zur Erleichterung seiner späteren Auflösung gelockert wird.
